Europäisches Patentamt

European Patent Office

Office européen des brevets

(19)

(11) **EP 0 607 524 B1**

(12) **EUROPÄISCHE PATENTSCHRIFT**

(45) Veröffentlichungstag und Bekanntmachung des Hinweises auf die Patenterteilung:
**20.08.1997 Patentblatt 1997/34**

(51) Int Cl.⁶: **G02B 6/42**, G02B 6/30

(21) Anmeldenummer: **93118640.7**

(22) Anmeldetag: **19.11.1993**

(54) **Anordnung zur Ankopplung von Lichtwellenleiterenden an Sende- oder Empfangselemente**

Device for coupling the ends of light wave guides to emitting or receiving elements

Dispositif de couplage des fins des guides d'ondes lumineuses avec des éléments d'émission ou de réception

(84) Benannte Vertragsstaaten:
**DE DK ES FR GB GR IT NL PT SE**

(30) Priorität: **20.01.1993 DE 4301455**
**20.01.1993 DE 9217928 U**

(43) Veröffentlichungstag der Anmeldung:
**27.07.1994 Patentblatt 1994/30**

(73) Patentinhaber: **ROBERT BOSCH GMBH**
**70442 Stuttgart (DE)**

(72) Erfinder:
• **Hauer, Heiner, Dipl.-Ing.**
**D-70734 Fellbach (DE)**
• **Kuke, Albrecht, Dr. rer. nat.**
**D-71549 Auenwald (DE)**
• **Wörner, Andreas, Dipl.-Ing. (FH)**
**D-71554 Weissach i.T. (DE)**

(56) Entgegenhaltungen:
**EP-A- 0 398 575**      **EP-A- 0 420 029**
**DE-A- 3 932 655**      **US-A- 5 017 986**

## Beschreibung

Aus der DE 35 43 558 A1 ist eine optoelektrische Koppelanordnung bekannt. Diese Anordnung dient zur Ankopplung von Lichtwellenleiterenden an Sende- oder Empfangselemente. Sie enthält einen einteiligen Träger aus einkristallinem Silizium, auf dessen Unterseite ein Lichtwellenleiterende in einer Nut fixiert ist und auf dessen Oberseite ein Sende- oder Empfangselement vorgesehen ist, dessen emittierende oder empfangende Fläche der Unterseite zugewandt ist. Zwischen Lichtwellenleiterende und Sende- oder Empfangselement befindet sich ein optisches Umlenkbauelement.

In einem Ausführungsbeispiel wird angegeben, daß der Lichtwellenleiter sich auf einer Seite und das Empfangselement auf der anderen Seite des Silizium(Si)-Trägers befindet. Der Lichtwellenleiter ist dabei in einer V-Nut befestigt, in der sich auch ein Spiegel befindet. Zwischen der lichtempfindlichen Fläche des Empfangselementes und dem Spiegel befindet sich ein Durchbruch. Dieser kann mit einem lichtleitenden Material derart gefüllt sein, daß ein lichtleitender Kanal entsteht. Die Herstellung einer solchen opto-elektrischen Koppelanordnung ist sehr aufwendig, da eine Nut und ein Durchbruch vorgesehen sind. Zudem ist eine Justage des Spiegels notwendig.

Aus der DE 41 06 721 A1 ist ebenfalls eine Anordnung zur Ankopplung von Lichtwellenleiterenden an Empfangselemente bekannt. Die Ankopplung von Lichtwellenleiterenden an Empfangselemente muß derart erfolgen, daß die Lichtrichtung nahezu senkrecht zur lichtempfindlichen Fläche der Empfangselemente verläuft. Um dies zu erreichen, werden die Lichtwellenleiterenden in durch anisotropes Ätzen hergestellten V-Nuten in einem ersten Träger, der beispielsweise aus Silizium ist, fixiert. Das austretende Lichtbündel wird an den abgeschrägten verspiegelten Stirnflächen der V-Nuten reflektiert. Auf dem ersten Träger ist ein zweiter lichtdurchlässiger Träger, der beispielsweise ebenfalls aus Silizium ist, befestigt, auf dem die Empfangselemente montiert sind. Durch eine versetzte Anordnung der Empfangselemente ist es möglich, die Lichtwellenleiter sehr dicht nebeneinander anzuordnen. Durch den lichtdurchlässigen Träger wird eine Brechung des Lichtbündels zum Lot hin erreicht und eine nahezu senkrechte Stellung zwischen Lichtbündel und lichtempfindlicher Fläche der Empfangselemente ist herstellbar. Bei dieser Anordnung ist ebenfalls die aufwendige Herstellung von Nachteil, die durch die Verwendung von zwei unabhängigen Trägern, die aufeinander justiert werden müssen, entsteht.

Aus der US 5 017 986 ist es bekannt, Licht innerhalb eines Substrates durch Reflexion an den Flanken von V-Nuten umzuleiten.

Aus der EP 420 029 A1 ist es bekannt, in einen transparenten Körper Licht einzustrahlen, das an einer Einkoppelfläche gebrochen und an einer Umlenkfläche reflektiert wird, bevor es über eine dritte Fläche austritt.

Eine Koppel anordnung gemäß dem Oberbegriff des Patentanspruches 1 ist aus der DE 39 32 655 A1 bekannt.

Ausgehend von diesem Stand der Technik ist es Aufgabe der Erfindung, eine Anordnung zur Ankopplung von Lichtwellenleiterenden an ein Sende- oder Empfangselement anzugeben, die einfach herstellbar ist und eine Kapselung des Sende- oder Empfangselements erlaubt.

Die Aufgabe wird durch eine Anordnung mit den Merkmalen des Patentanspruchs 1 gelöst. Vorteilhafte Weiterbildungen sind in den Unteransprüchen angegeben.

Der Lichtwellenleiter wird auf der Unterseite eines Silizium-Trägers in einer Nut geführt. Das aus einem Lichtwellenleiterende austretende Licht wird in den Si-Träger hineingeführt, wobei es den Si-Träger nahezu senkrecht durchdringt und auf seiner Oberseite austritt. Dort trifft das Licht auf ein planar auf der Oberfläche des Si-Trägers montiertes Empfangselement. Da der Lichtwellenleiter mit der V-Nut hierbei von dem Empfangselement durch den Si-Träger getrennt ist, wird hier zur hermetischen Abdichtung zwischen Lichtwellenleiter und Empfangselement kein weiteres Element benötigt. Das Empfangselement kann auf der Oberseite des Si-Trägers mit einem übergestülpten Deckel hermetisch dicht gekapselt werden. Ein solcher Deckel kann beispielsweise auch durch anisotropes Ätzen aus Silizium hergestellt werden. Die Montage eines Siliziumdeckels auf dem Silizium-Träger ist von Vorteil, da sich das Temperaturverhalten entspricht. Eine Montage des Deckels ist beispielsweise durch anodisches Bonden denkbar. Ein weiterer Vorteil der erfindungsgemäßen Lösung ist, daß der Lichtweg sehr kurz gehalten werden kann und durch das hochbrechende Silizium führt, was zu einer geringen Aufweitung des Strahlbündels führt. Dadurch lassen sich Empfangselemente mit kleiner aktiver Fläche einsetzten, die eine höhere Grenzfrequenz haben. Es ist weiter von Vorteil die Stirnfläche der Nut mit einer Antireflexionsbeschichtung zu versehen.

Anstelle eines Empfangselements kann ein Sendeelement vorgesehen werden, welches Licht in den Si-Träger hinein emittiert, so daß es darüber in den Lichtwellenleiter eingekoppelt wird.

Anhand der Abbildungen werden Ausführungsbeispiele der Erfindung beschrieben. Es zeigen :

Fig. 1 einen Querschnitt durch eine Anordnung mit auf der Oberfläche montiertem Empfangselement,
Fig. 2 eine Darstellung der interessierenden Winkel,
Fig. 3 einen Querschnitt durch einen Silizium-Träger mit in einer Aussparung eingebrachter Fotodiode und
Fig. 4 eine erfindungsgemäße Anordnung mit einem in Silizium geätzten Deckel.

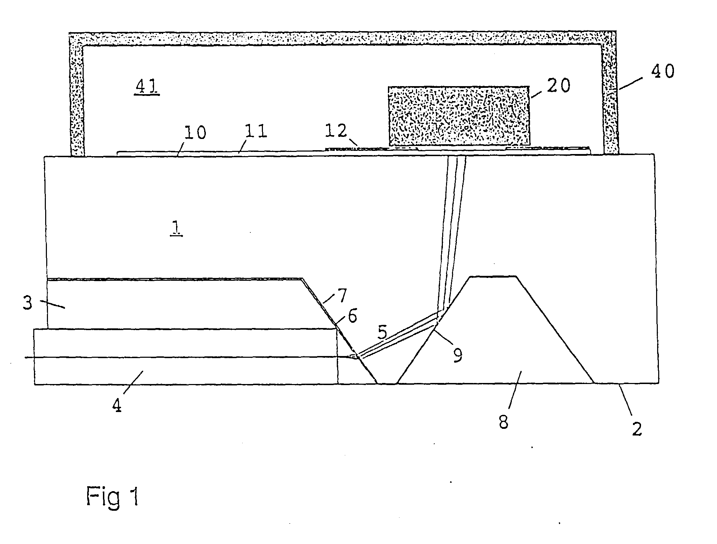

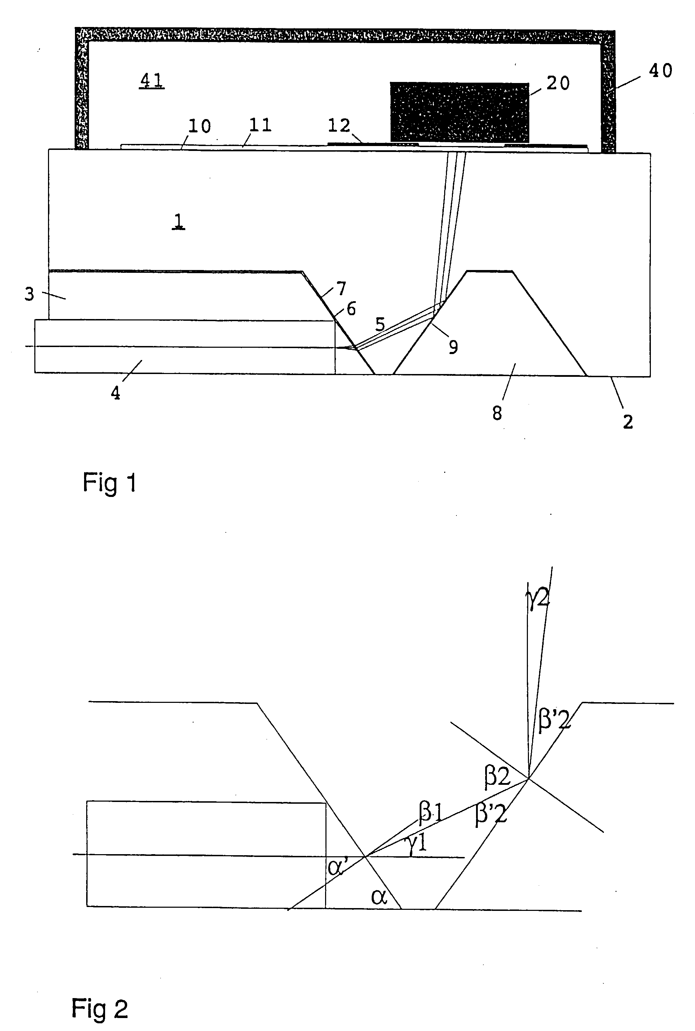

Die Fig.1 zeigt einen Querschnitt durch ein erfindungsgemäßes Ausführungsbeispiel. In einen Silizium-Träger 1, der von einem Wafer gebildet wird, ist auf der Unterseite 2 eine V-Nut 3 anisotrop eingeätzt. Die Unterseite 2 ist dabei parallel zu einer kristallografischen (100)-Ebene des Siliziums ausgerichtet. Die Richtung der geätzten V-Nut liegt dann parallel zur kristallografischen ⟨110⟩-Richtung. Die Flanken der anisotrop geätzten V-Nut werden durch langsam ätzende (111)-Ebenen an den Seiten- und Stirnflächen gebildet, die mit der Waferoberfläche einen Böschungswinkel von $\alpha = 54,7°$ einschließen. Die Breite der
V-Nut 3 wird zweckmäßigerweise mindestens so gewählt, daß eine in sie eingelegte Lichtleitfaser 4 gerade ganz in die V-Nut eintaucht, wie in Fig.2 dargestellt.

Für eine Faser mit dem Radius $r = 62,5 \mu m$ ergibt sich dann eine Nutenbreite von

$$b = r \cdot \sqrt{6} - h \cdot \sqrt{2} \qquad (1)$$

wobei h die Höhe des Fasermittelpunktes über der Waferoberfläche ist. Bei ganz eingesenkter Faser ist $h = -r$ und somit $b = 241,5 \mu m$. Das aus der Faser 4 austretende Lichtbündel 5 trifft auf die Stirnwand 6 der V-Nut 3. Diese Stirnwand ist mit einer Antireflexionsbeschichtung 7 beschichtet, die so ausgelegt ist, daß für einen Einfallswinkel von $\alpha' = 90° - \alpha = 35,3°$ gerade die Reflexion eliminiert wird. Ebenso soll in einem schmalen Winkelbereich von der Größe der Strahldivergenz des Lichtbündels 5 (ca 6° bei einer Singlemode-Faser) die Reflexion vermindert sein. Nach den bekannten Regeln der Antireflexionsbeschichtung läßt sich eine solche Antireflexions-Schicht durch eine Einfach-Schicht mit etwa einer Dicke von einer Viertelwellenlänge (genau eine Viertelwellenlänge wäre die Schichtdicke bei senkrechtem Einfall) und einem Brechungsindex von $n_s = \sqrt{n_{si}}$ erreichen, wobei $n_{si} = 3,5$ der Brechungsindex von Silizium ist. Hieraus ergibt sich ein Brechungsindex für die Antireflexions-Schicht von 1,87. Dieser Brechungsindex läßt sich gut bei einer Beschichtung mit Siliziumoxinitrid durch geeignete Wahl des Stickstoff/Sauerstoff-Verhältnisses erreichen. Ebenso kann jedoch auch jede andere geeignete Antireflexionsbeschichtung, wie Doppel- oder Mehrfachschichten verwendet werden. Es ist auch nicht störend, wenn sich die Antireflexions-Schicht außer auf der Stirnfläche 6 auf der ganzen Unterseite des Silizium-Trägers befindet.

Das Lichtbündel 5 wird an der Stirnseite 6 der V-Nut 3 wegen der Antireflexions-Schicht nahezu vollständig in das Innere des Si-Wafers 1 hineingebrochen. In geringem Abstand von der Stirnfläche 6 der V-Nut 3 ist eine weitere Vertiefung 8 anisotrop geätzt. Das Lichtbündel trifft auf die Flankenfläche 9 dieser Vertiefung. Dort wird es total reflektiert, da der Grenzwinkel der Totalreflexion zum Austritt aus dem Silizium überschritten ist. Dieser Grenzwinkel wäre auch dann überschritten, wenn auch die Flankenfläche 9 noch mit der Antireflexions-Schicht 7 beschichtet wäre. Es besteht also keine Notwendigkeit, die Antireflexions-Schicht im Bereich der Vertiefung 8 zu entfernen.

Die Bezeichnung und Lage der für die Brechung und Reflexion relevanten Winkel sind in der Fig.2 für den Zentralstrahl des Bündels in einem maßstäblich vergrößerten Ausschnitt herausgezeichnet. Im Einzelnen haben die Winkel folgende Bedeutung:

$\alpha$ Böschungswinkel zwischen Waferoberfläche (100) und Flankenfläche (111)

$$\alpha = \text{Arctan} (\sqrt{(2)}) = 54,7° \qquad (2)$$

$\alpha'$ Einfallswinkel auf Stirnfläche 6

$$\alpha' = 90° - \alpha \qquad (3)$$

$\beta_1$ Brechungswinkel an Fläche 6

$$\beta_1 = \text{Arcsin} (\sin(\alpha')/n_{si}) \qquad (4)$$

$\gamma_1$ Richtungswinkel im Si zwischen Fläche 6 und Fläche 9

$$\gamma_1 = 90° - \alpha - \beta_1 \qquad (5)$$

$\beta_2'$ Ergänzungswinkel des Einfallswinkels an Fläche 9

$$\beta_2' = \alpha - \gamma_1 \qquad (6)$$

$\beta_2$ Einfallswinkel an Fläche 9

$$\beta_2 = 90° - \beta_2' \qquad (7)$$

$$\gamma_2 = 90° - \alpha - \beta_2' \qquad (8)$$

In der folgenden Tabelle 1 sind die nach den Gleichungen (2) bis (8) berechneten Zahlenwerte sowohl für den Zentralstrahl des aus der Faser austretenden Lichtbündels 5 als auch für den oberen und unteren Randstrahl des Bündels angegeben. Dabei wird von einer Singlemodefaser mit einer numerischen Apertur von 0,1 ausgegangen, bei der die Randstrahlen um 6° nach oben und unten vom Mittelpunktsstrahl abweichen.

Tabelle 1

| Ausbreitungswinkel des Strahlbündels 5 | | | | | | |
|---|---|---|---|---|---|---|
| Strahl | $\alpha'$ | $\beta_1$ | $\gamma_1$ | $\beta_2'$ | $\beta_2$ | $\gamma_2$ |
| Zentral | 35,3° | 9,5° | 25,8° | 29,0° | 61,0° | 6,3° |
| oben | 29,3° | 8,0° | 27,3° | 27,5° | 62,5° | 7,8° |
| unten | 41,3° | 10,9° | 24,4° | 30,3° | 59,7° | 5,0° |

Der Grenzwinkel der Totalreflexion für die Grenzfläche Silizium/Luft ist ($n_{si}$ = 3,5)

$$\beta_{gr}(Si\text{-}L) = \text{Arcsin}(1/n_{si}) = 16,6°.$$

Wenn die Grenzfläche mit Antireflexionsbeschichtung (AR) versehen ist ($n_s$ = 1,87), so ist der Grenzwinkel der Totalreflexion

$$\beta_{gr}(Si\text{-}AR) = \text{Arcsin}(n_s/n_{si}) = 32,3°.$$

Die Einfallswinkel $\beta_2$ aus Tabelle 1 sind in allen Fällen wesentlich größer, so daß für alle Strahlen des Lichtbündels die Totalreflexion gewährleistet ist. Ein Verspiegelung ist daher nicht erforderlich.

Die Richtungswinkel $\gamma_2$ weichen nur um wenige Grad von der Senkrechten ab. Die Winkel sind klein gegenüber dem Grenzwinkel der Totalreflexion, so daß das Licht an der Substratoberseite 10 austreten kann. An der Austrittsstelle kann zweckmäßigerweise ebenfalls eine Antireflexionsbeschichtung 11 für nahezu senkrechten Einfall aufgebracht werden. An der Austrittsfläche hat das Lichtbündel bei einer Standardwaferdicke von 520 µm eine Aufweitung von 41 µm. Damit lassen sich auch kleinflächige Fotodioden verwenden.

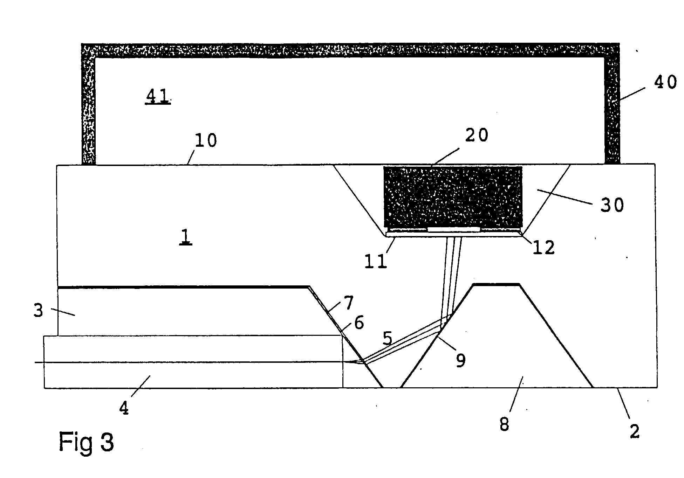

Zur genauen Ausrichtung der Fotodiode 20 zur reflektierenden Struktur auf der Waferunterseite kann auch die Waferoberseite strukturiert werden. Die Strukturierung der Waferoberseite kann z.B. eine Metallisierung 12 mit Aussparung der Lichtaustrittsfläche sein. Die Ausrichtung von fotolithografischen Masken läßt sich nach dem Stand der Technik durch Zweiseitenbelichtung des Wafers hochgenau erreichen. Zusätzlich kann der Wafer auf der Oberseite zur Aufnahme der Fotodiode 20 anisotrop geätzt werden, wie in Fig.3 gezeigt wird. Die anisotrope Ätzung kann mit Ausrichtung parallel zu den ⟨110⟩-Richtungen erfolgen. Man erhält schräge Seitenwände der Aussparung 30 zur Aufnahme der Fotodiode. Die Ätzung muß nach einer vorbestimmten Zeit beendet werden, dann erhält man einen glatten und ebenen Gehäuseboden parallel zur Oberfläche in einer (100)-Ebene. Durch die Aussparung verkürzt sich auch der Lichtweg des Strahlbündels 5, was zu einer geringeren Strahlaufweitung und zu geringerer Dämpfung führt.

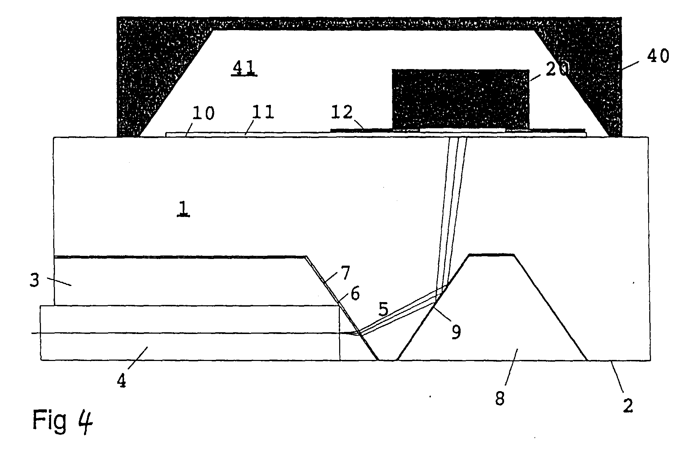

Die Oberseite des Wafers mit der Fotodiode 20 wird mit einem Deckel 40, der aus Silizium oder einem anderen Material, das in der Wärmeausdehnung an Silizium angepaßt ist, hermetisch dicht abgeschlossen. Dies läßt sich einfach durchführen, da die Waferoberfläche im Randbereich des Deckels 40 eben bleibt. Verwendet man als Deckelmaterial ebenfalls Silizium, so läßt sich der Deckel ebenfalls durch anisotropes Ätzen einer Vertiefung 41 herstellen, wie in Fig. 4 dargestellt. Der Deckel 40 kann dann durch anodisches Bonden oder ein anderes gebräuchliches Befestigungsverfahren auf der Oberseite des Wafers 1 befestigt werden.

Die beschriebene erfindungsgemäße Anordnung läßt sich nicht nur für einen einzelnen Lichtpfad, wie in den Abbildungen gezeigt, einsetzen, sondern für sehr viele Lichtpfade nebeneinander beispielsweise bei einem Lichtleitfaserbändchen.

Die Fotodioden auf der Oberseite können dann gemeinsam hermetisch dicht verkapselt werden

In dem zuvor beschriebenen Ausführungsbeispiel wurde eine Ankopplung zwischen einem Lichtwellenleiter und einem Empfangselement realisiert. Anstelle eines Empfangselements kann auch ein Sendeelement verwendet werden, dessen emittierende Fläche dem Silizium-Träger 1 zugewandt ist.

**Patentansprüche**

1.  Anordnung zur optischen Ankopplung eines Lichtwellenleiterendes, das in einer Nut (3) an der Unterseite eines einteiligen Trägers aus einkristallinem Silizium (1) fixiert ist, an ein Sende- oder Empfangselement (20), das auf der der Unterseite gegenüberliegenden Oberseite (10) des Trägers (1) aneordnet ist und dessen Licht emittierende beziehungsweise empfangende Fläche der Unterseite (2) zugewandt ist, wobei die Nut (3) eine Stirnfläche (6) aufweist, die zwischen Nutgrund und Stirnfläche einen stumpfen Winkel bildet, so daß das Koppellicht durch die geneigte Stirnfläche (6) der Nut gebrochen wird und durch den Träger (1) hindurch geführt wird, wobei

    -   die Unterseite (2) parallel zu einer kristallographischen (100)-Ebene ausgerichtet ist, dadurch gekennzeichnet, daß
    -   die Nut (3) eine anisotrop geätzte V-Nut ist, deren Richtung parallel zur kristallographischen <110>-Richtung verläuft,
    -   in der Unterseite (2) eine anisotrop geätzte Vertiefung (8) mit einer Flankenfläche (9) vorgesehen ist, derart, daß das Koppellicht nach Brechung an der Stirnfläche (6) an der Flankenfläche (9) totalreflektiert und in das Sende- oder Empfangselement (20) eingekoppelt wird.

2.  Anordnung nach Anspruch 1, dadurch gekennzeichnet, daß die Stirnfläche (6) mit einer Antireflexionsbeschichtung (7) beschichtet ist.

3.  Anordnung nach Anspruch 1 oder 2, dadurch gekennzeichnet, daß das Sende- oder Empfangselement (20) in eine Aussparung (30) auf der Oberseite (10) des Trägers (1) eingebracht ist.

4.  Anordnung nach einem der Ansprüche 1 bis 3, dadurch gekennzeichnet, daß das Sende- oder Empfangselement (20) auf der Oberseite (10) in den Träger (1) integriert ist.

**Claims**

1.  Arrangement for optically coupling an optical waveguide end, which is fixed in a groove (3) on the underside of a single-part carrier made of monocrystalline silicon (1), to a transmitting or receiving element (20) which is arranged on the top side (10), opposite to the underside, of the carrier (1) and whose light-emitting or light-receiving surface faces the underside (2), the groove (3) having an end face (6) which forms an obtuse angle between the bottom of the groove and the end face, with the result that the coupling light is refracted by the inclined end face (6) of the groove and is guided through the carrier (1),

    -   the underside (2) being oriented parallel to a crystallographic (100) plane, characterized in that
    -   the groove (3) is an anisotropically etched V-groove, the direction of which runs parallel to the crystallographic <110> direction,
    -   an anisotropically etched depression (8) having a side face (9) is provided in the underside (2), in such a way that the coupling light, after being refracted at the end face (6), is totally reflected at the side face (9) and is coupled into the transmitting or receiving element (20).

2.  Arrangement according to Claim 1, characterized in that the end face (6) is coated with an antireflection coating (7).

3.  Arrangement according to Claim 1 or 2, characterized in that the transmitting or receiving element (20) is introduced into a cutout (30) on the top side (10) of the carrier (1).

4.  Arrangement according to one of Claims 1 to 3, characterized in that the transmitting or receiving element (20) is integrated on the top side (10) into the carrier (1).

**Revendications**

1.  Dispositif de couplage optique de l'extrémité d'un guide de lumière bloqué dans une rainure (3) de la face inférieure d'un support en une seule pièce d'un silicium monocristallin (1), sur un élément d'émission ou de réception (20) prévu sur la face supérieure (10) du support (1), opposée à la face inférieure, et dont la surface d'émission ou de réception de lumière est tournée vers la face inférieure (2), la rainure (3) ayant une surface frontale (6) formant un angle obtus entre le fond de la rainure et la face frontale pour que la lumière de couplage soit réfractée par la surface frontale inclinée (6) de la rainure et passe dans le support (1),

    •   la face inférieure (2) étant alignée parallèlement par à plan cristallographique de coordonnées <100>,

    caractérisé en ce que

    •   la rainure (3) est une rainure en V, gravée, anisotrope, dont la direction est parallèle à la direction cristallographique <110>,
    •   la face inférieure (2) comporte une cavité (8) gravée, anisotrope ayant une surface de flanc (9) telle que la lumière de couplage, après réfraction par la surface frontale 6 subisse une réflexion totale par la surface (9) du flanc et soit couplée dans l'élément d'émission ou de réception (20).

2.  Dispositif selon la revendication 1,
    caractérisé en ce que
    la surface frontale (6) est enduite d'une couche anti-réflexion (7).

3.  Dispositif selon la revendication 1 ou 2,
    caractérisé en ce que
    l'élément d'émission ou de réception (20) est logé dans une cavité (30) à la surface supérieure (10) du support (1).

4.  Dispositif selon l'une des revendications 1 à 3,
    caractérisé en que
    l'élément d'émission ou de réception (20) est intégré dans la surface supérieure (10) du support (1).

Fig 1

Fig 1

Fig 2

Fig 3

Fig 4